# EUROPEAN PATENT APPLICATION

(11) **EP 3 473 085 A1**
(43) Date of publication of application: **24.04.2019**
(21) Application number: 17197607.9
(22) Date of filing: 20.10.2017
(51) Int. Cl.: A01G 27/04, A01G 9/029, A01G 13/02

(54) **A CIRCULAR LID**

(71) Applicant: Land Life Company B.V., 1092 AD Amsterdam (NL)
(72) Inventor: LÖVENSTEIN, Harrie Maurice, 1078 GA Amsterdam (NL); ASJES, Arnout Jan, 2051 HL Overveen (NL); RUYS, Jurriaan, 1017 RM Amsterdam (NL)
(74) Representative: Cramwinckel, Michiel

(57) **Abstract**

The invention is directed to a circular lid (1) having a lower end (2) and an upper end (3) and comprising a circular projection (4) and an opening (5) in the lid (1) within the circular projection (4) and provided with one or more planes (6) descending from the circular projection (4) towards the opening (5) and one or more first projections (7) having a flat upper surface (8) defining the upper end (3) of the lid (1). The lid may be used as part of a planting aid product and may be composed of biodegradable pulp.

## Description

The invention is directed to a circular lid. Especially a circular lid which may be used as part of a planting aid product further comprising a container comprising an annular compartment and a central open channel, where in use a plant is positioned.

Such a lid as part of a planting aid product is described in WO2015/063243. This publication describes a planting aid product provided with a flat circular lid provided with an opening in its centre. The lid covers an annular compartment filled with a volume of water. At the centre of the container a central open channel is provided through which in use a plant, especially a tree, grows. The tree is provided with water from the annular compartment via a wick which runs from the annular compartment via the central open channel to the roots of the tree. The lid and the container are made of a biodegradable paper or wood based pulp with waterproofing additives. The planting aid product is buried in the ground, covered by a moisture resistant cover sheet which in turn is covered by a layer of soil. The container should provide water to the tree for a certain period of time such that the trees get established. After a while the pulp product will disintegrate and become part of the soil surrounding the tree.

A problem with the planting aid as described above is that the lid may be damaged due to rain fall. The object of the present invention is to provide a lid which in use will not damage as much as the prior art lid.

This is achieved with the following lid. A circular lid having a lower end and an upper end and comprising a circular projection and an opening in the lid within the circular projection and provided with one or more planes descending from the circular projection towards the opening and one or more first projections having a flat upper surface defining the upper end of the lid.

Applicants found that when such a lid is used as lid for a planting aid product the damage due to rain fall is significantly less. It even allows one to use a planting aid device having such a lid without having to use the moisture resistant cover sheet as in the prior art product. The projections provide structural strength and the descending planes direct any rainfall water towards the opening. In this manner the lid will have less or even no water which remains on the upper surface and which has time to weaken the material of the lid. Further advantages will be described below.

In this specification terms like upper, lower, vertical and horizontal are used to describe features of this invention. These terms relate to the orientation the features, like the lid and container, are normally used and are in no manner to be used to narrowly interpreted the invention.

The circular projection suitably divides the circular lid in an outer circular part and an inner circular part. The outer circular part may be provided with one or more planes descending from the circular projection to the circular edge of the lid. To provide the circular projection somewhere between the edge of the lid and the opening is advantageous because it will provide the lid more structural strength. The descending planes in the outer circular part will direct any rainfall towards the edge of the lid where it will drop into or on the ground. This avoids a prolonged wetness of soil covering the lid and thus a prohibitive high load on the lid.

The flat upper surface suitably has a surface area of between 10 and 50 % of the total projected circular area of the lid. Such a flat upper surface is especially relevant when the lid is composed of a biodegradable paper or wood based pulp or any other material which requires a drying step when manufacturing the lid. The manufacturing process may involve a so-called pulping step which produces a wet intermediate lid product. This intermediate lid product is subsequently dried. In this drying step it is advantageous to position the lid upside down on a flat surface. In that part of the process the structure may deform due to a not adequate support. For this reason the lid suitably has a flat surface as its upper end which provides the desired support. On the other hand it is preferred to have a high area ratio for the descending planes to increase the dewatering capacity of the lid. When designing an optimal lid a balance will have to be reached to fulfil both described requirements.

The lid is suitably provided with a downward projected flap. This flap suitably has a frusto conical shape. The lower end of the flap will be the lower end of the circular lid. The frusto conical shaped flap allows to horizontally place the lid on a container which is not necessary horizontally positioned. This is especially advantageous when the lid is used as part of a planting aid product further comprising a container as described in the afore referred to prior art publication. It is envisaged that when a large number of such containers are buried in the ground a horizontal positioning of every container will in practice not be achieved. A horizontal positioning of the lid is nevertheless required to achieve the optimal dewatering via the descending planes of the lid. By having a relatively larger frusto conical shaped flap such positioning on the outer upper edge of the container is possible. This is because the inner surface of the frusto conical flap of a horizontally positioned lid can fully contact the upper circular edge of a non-horizontal positioned container. For such positioning it is preferred that the material of the lid is somewhat flexible, like when a biodegradable pulp is used as the material for the lid. The lid may be fixed to this outer edge of the container by a clamping connection.

The circular projection, the circular lid and the opening are suitably positioned co-axial with respect to an axis perpendicular to the plane of the circular lid. This is advantageous because the positioning of the opening relative to a container which is enclosed by the lid can only be performed in a single manner. This avoids wrong positioning and/or additional handlings when placing the lid.

The first projections may have any shape. The flat upper surfaces of all the first projections are suitably in one plane. This provides a stable support surface when the lid is placed upside down. The one or more first projections are suitably positioned radially. Preferably the lid comprises 4 to 10 radially positioned first projections. A lid having a commercially applicable design may have 6, 7 or 8 radially positioned projections, preferably 6.

When the circular projection divides the circular lid in an outer circular part and an inner circular part it is preferred that the first radially positioned projections run from a radial position in the outer circular part to a radial position within the inner circular part. The first projections may even run from the conical shaped flap. In such a design the radially outer wall of the first projection is present in the same conical plane as the frusto conical shaped flap.

When the circular projection divides the circular lid in an outer circular part and an inner circular part it is preferred that between the radially positioned first projections in the outer circular part a second radial projection is present having a flat upper surface. The upper surface of such second projections are suitably flush with the flat upper surface of the radially projected first projections.

The lid may be composed of any material, like for example polymers, such as polyethylene and polypropylene. When the lid is used as part of a planting aid product it is preferred that the material of the lid is biodegradable. Suitable biodegradable materials are for example bio-degradable polymers such as PLA (poly lactic acid). Preferably the biodegradable material is biodegradable pulp as made from a biodegradable lignocellulosic fibrous material. Typically such lignocellulosic fibrous material is obtained by chemically or mechanically separating the cellulose fibres from wood, waste of crops, fibre crops or waste paper, especially waste carton. Examples of fibre crops are *Miscanthus spp,* Bamboo *(Bambusoideae spp)* or Guayule *(Parthenium argentatum).* The pulp lid product itself may be made by well known processes.

The biodegradable pulp may comprise a water resistant compound to improve the water resistance properties. A suitable water resistant compound is a wax. The wax may be added to the emulsion containing pulp fibres when preparing a lid pulp product. Examples of such processes are described in GB456434 and GB276395. Applicants have found that the circular lid as composed of a biodegradable pulp product, the lid pulp product, is suitably made by a process comprising the following steps:
(a) spraying a water-resistant compound on the surface of a starting, preferably dried, lid pulp product thereby obtaining a lid pulp product made of biodegradable pulp and the water-resistant compound having a melting temperature of above 60 °C and
(b) pressing the lid pulp product obtained in step (a) in a mould at a temperature above the melting temperature of the water-resistant compound, and
(c) releasing the lid pulp product from the mould and reducing the temperature to below the melting temperature of the water-resistant compound.

The water-resistant compound in this process has a melting point of above 60 °C and preferably below 200 °C. The water-resistant compound is preferably a hydrophobic compound. Preferably the water-resistant compound is a wax. Waxes having the desired melting points are known to achieve a good water-resistance. The wax may be a petroleum or natural derived paraffin or microwax or a mixture thereof. Optionally the wax may be obtained by a Fischer-Tropsch reaction starting from hydrogen and carbon monoxide. The melting temperature of the wax may be between 60°C and 120°C and preferably between 70 and 120 °C.

In step (a) the water-resistant compound is sprayed on the surface of a starting three-dimensional shaped biodegradable pulp product. Such a lid pulp product is preferably dry such that the water-resistant compound can easily adhere and even absorb into the pulp material. The amount of water-resistant compound applied per surface area of the lid pulp product can be easily determined by the skilled person. For a typical wax having the preferred melting properties as described above between 50-600 g/m² may be applied.

The starting lid pulp product may comprise additives such as bio-repellents or plant based pesticides to protect the lid pulp product against insects and small mammals. Example of a suitable bio-resistant is capsaicin. These additives may be added to the emulsion containing pulp fibres when preparing a lid pulp product. Preferably such additives are added to the water-resistant compound. In this manner they will be deposited at or close to the surface of the biodegradable lid pulp product which will enhance their function as resistant to insects and the like. This is especially advantageous when the biodegradable lid pulp product is part of a planting aid product as here described.

The pressure in step (b) as exercised on the lid pulp product is preferably above 0.1 MPa and more preferably above 1 MPa. Suitably the pressure is below 5 MPa and more preferably below 2 MPa.

The lid according to the invention is preferably used as part of a planting aid product where the lid closes a container at its upper end. Preferably the material of the container is the same or different biodegradable pulp material as the material of the lid. Possible biodegradable materials are exemplified above. The container preferably comprises a water-resistant compound which is preferably added to the container by the process as described for the lid pulp product.

The planting aid product suitably comprises a lid according to the invention and a container comprising an annular compartment defining a central open channel. When the planting aid product is used a plant is positioned in this central open channel. The annular compartment is closed at its lower end and open at its upper end such to hold a volume of water. The circular lid closes the upper open end of the annular compartment. The opening of the lid aligns with the central open channel of the container. This allows water as collected on the descending planes of the lid to flow to the opening and to the plant as present in the central channel of the container. The annular compartment suitably has a downwardly tapering outer wall and an upwardly tapering inner wall as illustrated in WO2015063243.

The planting aid product further comprises means to transport water from the annular compartment to the plant as present in the central channel. Such means may be a wick as illustrated in WO2015063243. The central channel may further be provided with a shroud which protects the upper end of the young plant as illustrated in WO2015063243. Such a shroud surrounds the plant and may run from the central channel to a position above the lid. The dimensions of the shroud may be such that one or more openings are provided between the shroud and the descending planes. In this way water can enter the central channel via such a slit. This may be achieved by providing an opening in the lid having the shape of a hexagon while the shroud has a circular cross section at the level of the opening. The wall of the shroud may also be provided with openings at the elevation of the opening in the lid allowing water to flow via such openings from the descending planes to the central channel.

The planting aid product is preferably used to aid the planting of a plant in a ground medium having a ground surface. The container is hereby buried in the ground medium, i.e. soil, such that the lid is substantially flush with the ground surface. The lid may be covered with ground medium and preferably only the outer circular part of the lid is covered with ground medium and the inner circular part is kept free of ground medium. This is advantageous because it provides anchoring of the lid against the wind on the one hand and visibility of the planting aid product and the young plant on the other hand. If the lid becomes wet the inner circular part can dry quickly because it is exposed to the sun. No moisture resistant cover is required and occasional rain water is beneficially used for growing the plant.

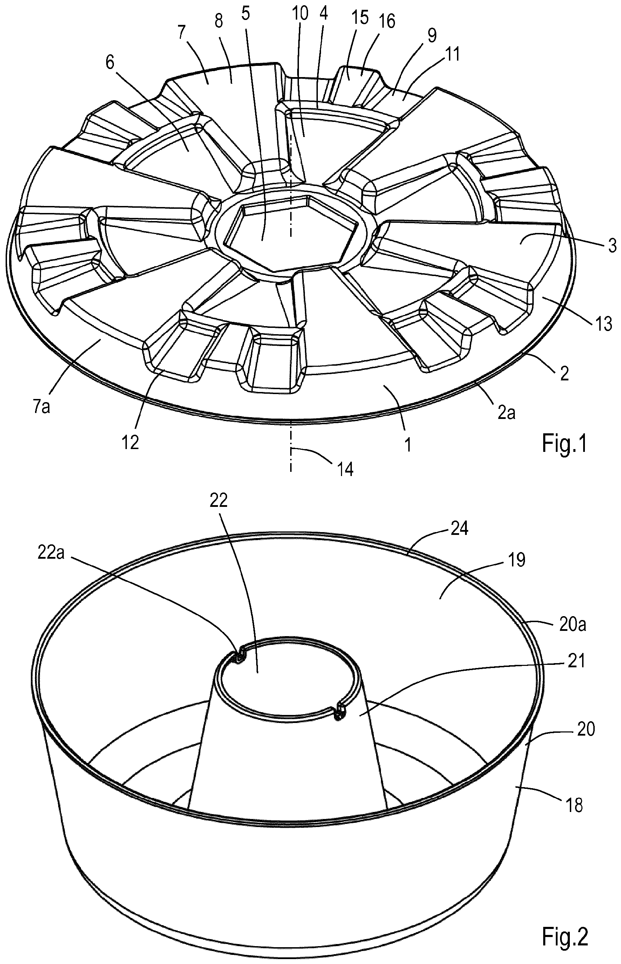

The invention will be further illustrated making use of Figures 1-3.

Figure 1 shows a circular lid 1 according to this invention having a lower end 2 and an upper end 3 and a circular projection 4. An opening 5 is present within the circular projection 4. The circular projection 4, the circular lid 1 and the opening 5 are positioned co-axial with respect to an axis 14 perpendicular to the plane of the circular lid 1. The circular projection 4 divides the circular lid in an outer circular part 9 and an inner circular part 10. Six radially positioned planes 6 descend from the circular projection 4 towards the opening 5 and twelve radially positioned planes 11 descend from the circular projection 4 to the circular edge 12 of the lid 1. Six radially positioned first projections 7 having a flat upper surface 8 are shown. The flat upper surfaces 8 define the upper end 3 of the lid 1. Further a downward projected flap 13 having a frusto conical shape is shown running from circular edge 12 downwards. This distance will depend on the dimensions of the lid. But when used in combination with a planting aid product the vertical distance between the upper end 3 of the lid and the lower end 2 may be between 1 and 6 cm and preferably between 2 and 6 cm. The lower end 2 of the circular lid 1 is the lower end of this flap 13. This lower end of flap 13 is provided with a small horizontally extending rim 2a which improves the strength of the lid. The radially outer wall 7a of the first projection 7 is present in the same conical plane as the frusto conical shaped flap 13.

Between the six radially positioned first projections 7 in the outer circular part 9 a second radial projection 15 is present having a flat upper surface 16. The upper surface 16 is flush with the flat upper surface 8 of the radially projected projections 7.

Figure 2 shows a container 18 which may be used in combination with lid 1 of Figure 1. The annular compartment 18 is provided with an annular compartment 19 with a downwardly tapering outer wall 20 and an upwardly tapering inner wall 21 defining a central open channel 22. The annular compartment 19 is closed at its lower end 23 and open at its upper end 24. A lid 1 encloses the upper open end 24 of the annular compartment 19. Opening 5 of the lid 1 aligns with the central open channel 22 of the container 18. Also shown are two indentations 22a at the upper edge of the inner wall 21 through which a wick (not shown) may be positioned which runs from the annular compartment 19 to the central channel 22. The upper edge 20a of the outer wall 20 may be provided with a horizontally extending rim having a length of for example 0.5 cm to enhance the strength of the annular compartment and to improve the fixing connection with lid 1.

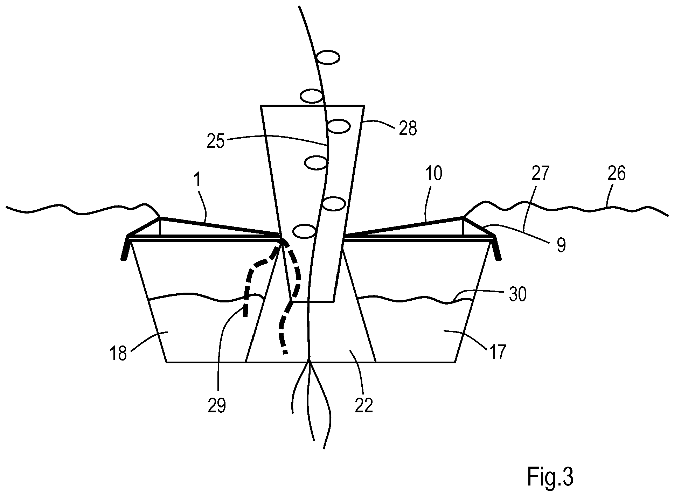

Figure 3 shows a planting aid product 17 provided with a lid 1 and a container 18. Further shown are a wick 29 connecting the water having water level 30 as present in the annular compartment 19 with the central channel 22. A shroud 28 surrounds the plant 25. The container 18 is buried in the ground medium 27 such that the lid 1 is substantially flush with the ground surface 26. The outer circular part 9 of the lid 1 is covered with ground medium 27 and the inner circular part 10 is kept free of ground 27.

## Claims

1. A circular lid 1 having a lower end 2 and an upper end 3 and comprising
- a circular projection 4 and an opening 5 in the lid 1 within the circular projection 4 and provided with one or more planes 6 descending from the circular projection 4 towards the opening 5 and
- one or more first projections 7 having a flat upper surface 8 defining the upper end 3 of the lid 1.

2. A lid according to claim 1, wherein the circular projection 4 divides the circular lid in an outer circular part 9 and an inner circular part 10 and wherein the outer circular part 9 is provided with one or more planes 11 descending from the circular projection 4 to the circular edge 12 of the lid 1.

3. A lid according to any one of claims 1-2, wherein the flat upper surface has a surface area of between 10 and 50 % of the total projected circular area.

4. A lid according to any one of claims 1-3, wherein the lower end 2 of the circular lid 1 is the lower end of a downward projected flap 13 having a frusto conical shape.

5. A lid according to any one of claims 1-4, wherein the circular projection 4, the circular lid 1 and the opening 5 are positioned co-axial with respect to an axis 14 perpendicular to the plane of the circular lid 1.

6. A lid according to claim 5, wherein the one or more first projections 7 having a flat upper surface 8 defining the upper end 3 of the lid 1 are positioned radially.

7. A lid according to claim 6, wherein the lid 1 comprises 4 to 10 radially positioned first projections 7.

8. A lid according to claim 7, wherein the lid 1 has 6 radially positioned first projections 7.

9. A lid according to any one of claims 7-8, wherein the circular projection 4 divides the circular lid 1 in an outer circular part 9 and an inner circular part 10 and wherein the outer circular part 9 is provided with one or more planes 11 descending from the circular projection 4 to the circular edge 12 of the lid 1, and
wherein the first radially positioned projections 7 run from a radial position in the outer circular part 9 to a radial position within the inner circular part 10.

10. A lid according to claim 9, wherein between the radially positioned first projections 7 in the outer circular part 9 a second radial projection 15 is present having a flat upper surface 16 flush with the flat upper surface 8 of the radially projected first projections 7.

11. A lid according to any one of claims 1-10, wherein the lid 1 is composed of biodegradable pulp.

12. A process to prepare a circular lid pulp product according to claim 11, comprising the following steps:
(a) spraying a water-resistant compound on the surface of a starting lid pulp product thereby obtaining a lid pulp product made of biodegradable pulp and the water-resistant compound having a melting temperature of above 60 °C and
(b) pressing the lid pulp product obtained in step (a) in a mould at a temperature above the melting temperature of the water-resistant compound, and
(c) releasing the lid pulp product from the mould and reducing the temperature to below the melting temperature of the water-resistant compound.

13. A planting aid product 17 comprising a lid 1 according to any one of claims 1-11 or obtainable by a process according to claim 12 and a container 18 comprising an annular compartment 19 with a downwardly tapering outer wall 20 and an upwardly tapering inner wall 21 defining a central open channel 22 [through which a symmetry axis runs], where in use a plant is positioned, wherein the annular compartment 19 is closed at its lower end 23 and open at its upper end 24 and wherein the circular lid 1 closes the upper open end 24 of the annular compartment 19 and wherein the opening 5 of the lid 1 aligns with the central open channel 22 of the container 18.

14. A planting aid product according to claim 13, wherein the lid 1 and the container 18 are composed of biodegradable pulp.

15. Use of a planting aid product 17 according to any one of claims 13-14 having a lid 1 according to any one of claims 2-11 or obtainable according to a process according to claim 12 to aid the planting of a plant 25 in a ground medium having a ground surface 26, wherein the container is buried in the ground medium 27 such that the lid is substantially flush with the ground surface 26 and wherein the outer circular part 9 is covered with ground medium 27 and the inner circular part 10 is kept free of ground medium 27.
